# EUROPEAN PATENT APPLICATION

(11) **EP 4 510 273 A1**
(43) Date of publication of application: **19.02.2025**
(21) Application number: 22943106.9
(22) Date of filing: 25.05.2022
(51) Int. Cl.: H01M 10/056, H01M 50/409

(54) **SEPARATOR AND PREPARATION METHOD THEREFOR, SECONDARY BATTERY, BATTERY MODULE, BATTERY PACK AND ELECTRIC DEVICE**

(71) Applicant: Contemporary Amperex Technology Co., Limited, Ningde, Fujian 352100 (CN)
(72) Inventor: HE, Xiaoning, Ningde, Fujian 352100 (CN); LIU, Chengyong, Ningde, Fujian 352100 (CN); XUE, Wenwen, Ningde, Fujian 352100 (CN); ZHONG, Chengbin, Ningde, Fujian 352100 (CN); HU, Bobing, Ningde, Fujian 352100 (CN)
(74) Representative: Kraus & Lederer PartGmbB
(86) International application number: PCT/CN2022/094957
(87) International publication number: WO 2023/225901

(57) **Abstract**

This application provides a separator including a porous substrate and a polymer coating. The polymer coating covers at least one surface of the porous substrate, and pores of the porous substrate are not completely filled by the polymer coating. The polymer coating has lithium ion conductivity.

## Description

### TECHNICAL FIELD

This application relates to the field of secondary batteries, and specifically, to a separator, a preparation method thereof, a secondary battery, a battery module, a battery pack, and an electric apparatus.

### BACKGROUND

With the development of electric vehicles and large energy storage systems, the market imposes higher requirements for the energy density of secondary batteries such as lithium-ion batteries. The use of lithium metal negative electrode plates is one of the manners to increase the energy density of secondary batteries. However, uneven lithium metal deposition on the surface of the lithium metal negative electrode plates during charging and discharging deteriorates the negative electrode plates, affecting the cycling performance of the secondary batteries.

### SUMMARY

In view of the foregoing problems, this application provides a separator, a preparation method thereof, a secondary battery, a battery module, a battery pack, and an electric apparatus, where when used in a secondary battery with a lithium metal negative electrode system, the separator can improve uniformity of lithium metal deposition on a surface of a negative electrode plate, thereby enhancing cycling performance of the secondary battery.

According to an aspect of this application, a separator is provided, including:
a porous substrate; and
a polymer coating, where the polymer coating covers at least one surface of the porous substrate, and pores of the porous substrate are not completely filled by the polymer coating; and the polymer coating has lithium ion conductivity.

In the foregoing separator, the continuous polymer coating with lithium ion conductivity covers the surface of the porous substrate, and the polymer coating does not completely fill the pores of the porous substrate, so electrolyte infiltration of the separator is not affected. The separator has the polymer coating uniformly distributed on its surface, and when used in a secondary battery with a lithium metal negative electrode system, it can improve uniformity of lithium metal deposition on a negative electrode, avoiding deteriorating electrochemical performance of the lithium metal negative electrode, thereby enhancing cycling performance of the secondary battery.

In some embodiments, constituents of the polymer coating include a matrix polymer, a plasticizer, a thickener, and a lithium salt.

In some embodiments, a mass percentage of the matrix polymer in the polymer coating is 5% to 30%.

In some embodiments, a mass percentage of the plasticizer in the polymer coating is 40% to 70%.

In some embodiments, a mass percentage of the thickener in the polymer coating is 3% to 15%.

In some embodiments, a mass percentage of the lithium salt in the polymer coating is 10% to 30%.

In some embodiments, the matrix polymer is selected from at least one of a linear polymer and a cross-linked network polymer.

In some embodiments, the plasticizer includes at least one of an ester and a sulfone.

In some embodiments, the plasticizer includes at least one selected from ethyl methyl carbonate, diethyl carbonate, dimethyl carbonate, dipropyl carbonate, methyl propyl carbonate, ethyl propyl carbonate, ethylene carbonate, methyl formate, methyl acetate, ethyl acetate, propyl acetate, methyl propionate, ethyl propionate, propyl propionate, methyl butyrate, ethyl butyrate, 1,4-butyrolactone, methyl sulfonyl methane, ethyl methanesulfonate, and diethyl sulfone.

In some embodiments, the thickener and the plasticizer are mutually soluble.

In some embodiments, the thickener includes at least one selected from polyvinyl formal, polyvinylidene fluoride and a copolymer thereof, poly(difluoroethylene), polyvinylidene difluoride, trichloroethylene, polytetrafluoroethylene, acrylic acid glue, epoxy resin, polyethylene oxide, polyacrylonitrile, sodium carboxymethyl cellulose, styrene-butadiene rubber, poly(methyl acrylate), polymethyl methacrylate, polyacrylamide, and polyvinylpyrrolidone.

In some embodiments, a weight-average molecular weight of the thickener is ≥ 500,000.

In some embodiments, the lithium salt includes at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluorobis(oxalato)phosphate, and lithium tetrafluoro(oxalato)phosphate.

In some embodiments, the constituents of the polymer coating further include inorganic particles with a mass percentage of 0% to 42%.

In some embodiments, the mass percentage of the inorganic particles in the polymer coating is 20% to 30%.

In some embodiments, the inorganic particle is at least one selected from aluminum oxide, boehmite, zirconium oxide, aluminum nitride, titanium dioxide, magnesium oxide, silicon carbide, calcium carbonate, and diatomaceous earth.

In some embodiments, a thickness of the polymer coating is 3 µm to 20 µm.

In some embodiments, the separator further includes an inorganic coating;
where at least one inorganic coating is disposed between the porous substrate and the polymer coating;
or at least one inorganic coating is disposed on a side surface of the polymer coating away from the porous substrate;
or at least one inorganic coating is disposed on a surface of the porous substrate away from the polymer coating.

According to a second aspect, this application further provides a preparation method of separator including the following steps:
mixing preparation raw materials of a polymer coating to prepare a precursor solution;
applying the precursor solution onto at least one surface of a porous substrate; and
polymerizing the precursor solution to prepare the polymer coating.

In some embodiments, based on mass percentage, the preparation raw materials include 5% to 30% of preparation monomers; and/or 40% to 70% of plasticizer; and/or 3% to 10% of thickener; and/or 10% to 20% of lithium salt; and/or 0% to 42% of inorganic particles.

In some embodiments, the preparation monomer includes at least one of a cross-linking monomer and a linear monomer; where the cross-linking monomer has at least two polymerization sites, and the linear monomer has one polymerization site.

In some embodiments, the cross-linking monomer is an acrylate monomer.

In some embodiments, a mass percentage of the cross-linking monomer in the preparation raw materials is 0% to 30%.

In some embodiments, the linear monomer is at least one selected from a carbonate monomer, a sulfate monomer, a sulfonate monomer, a phosphate monomer, a carboxylate monomer, a sulfone monomer, an amide monomer, a nitrile monomer, and an ether monomer.

In some embodiments, a mass percentage of the linear monomer in the preparation raw materials is 0% to 30%.

In some embodiments, in the step of polymerizing the precursor solution, an initiation method of the polymerization is one selected from electron beam initiation, ultraviolet initiation, and thermal initiation.

In some embodiments, a viscosity of the precursor solution is 300 mPa·s to 1000 mPa·s.

According to a third aspect, this application further provides a secondary battery including the foregoing separator or a separator prepared by using the foregoing preparation method of separator.

In some embodiments, the secondary battery further includes a lithium metal negative electrode plate; where the lithium metal negative electrode plate is disposed close to a polymer coating of the separator.

According to a fourth aspect, this application further provides a battery module including the foregoing secondary battery.

According to a fifth aspect, this application further provides a battery pack including the foregoing battery module.

According to a sixth aspect, this application further provides an electric apparatus including at least one of the foregoing secondary battery, battery module, and battery pack.

Details of one or more embodiments of this application are illustrated in the following accompanying drawings and descriptions, and other features, objectives, and advantages of this application will become apparent from the specification, the accompanying drawings, and the claims.

### BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; 53. cover plate; and 6. electric apparatus.

To better describe and illustrate those embodiments and/or examples in the present invention disclosed herein, reference may be made to one or more accompanying drawings. Additional details or examples used to describe the accompanying drawings should not be construed as limiting the scope of any one of the disclosed invention, currently described embodiment and/or example, and the best one of modes in the present invention currently understood.

### DESCRIPTION OF EMBODIMENTS

To facilitate the understanding of this application, this application will be described more comprehensively with reference to the relevant accompanying drawings. Preferred embodiments of this application are shown in the accompanying drawings. However, this application can be implemented in many different forms and is not limited to the embodiments described herein. Rather, these embodiments are provided for the purpose of providing a more thorough understanding of the disclosure of this application.

Unless otherwise defined, all technical and scientific terms used herein shall have the same meanings as commonly understood by persons skilled in the art to which this application pertains. The terms used herein in the specification of this application are intended to merely describe the specific embodiments rather than to limit this application. The term "and/or" used herein includes any and all combinations of one or more associated items listed.

The use of a lithium metal negative electrode plate is one of the manners to increase energy density of a secondary battery. However, uneven lithium metal deposition on a surface of the lithium metal negative electrode plate during charging and discharging deteriorates the negative electrode plate, affecting cycling performance of the secondary battery. A conventional separator in the secondary battery typically has a polymer layer distributed in an island-like pattern on its surface, where the polymer layer can provide an adhesion force during preparation of a battery cell, such that the electrode plate and the separator are attached to each other without misalignment. Due to extremely poor ionic conductivity, the polymer layer in the conventional separator needs to be distributed in an island-like pattern to avoid increasing internal resistance of the secondary battery.

The inventors have found through research that when the conventional separator is used in a secondary battery with a lithium metal negative electrode system, poor surface uniformity of the polymer layer distributed in an island-like pattern affects lithium metal deposition during charging and discharging, resulting in poor uniformity of lithium metal deposition on the lithium metal negative electrode plate, thereby affecting the cycling performance of the secondary battery.

This application provides a separator, a preparation method thereof, and a secondary battery, battery module, battery pack, and electric apparatus using such separator. Such secondary batteries are applicable to various electric apparatuses that use batteries, for example, mobile phones, portable devices, notebook computers, electric bicycles, electric toys, electric tools, electric vehicles, ships, and spacecrafts. For example, the spacecrafts include airplanes, rockets, space shuttles, spaceships, and the like.

An embodiment of this application provides a separator including a porous substrate and a polymer coating. The polymer coating covers at least one surface of the porous substrate, and pores of the porous substrate are not completely filled by the polymer coating; and the polymer coating has lithium ion conductivity.

In the foregoing separator, the continuous polymer coating with lithium ion conductivity covers the surface of the porous substrate, and the polymer coating does not completely fill the pores of the porous substrate, so electrolyte infiltration of the separator is not affected. The separator has the polymer coating uniformly distributed on its surface, and when used in a secondary battery with a lithium metal negative electrode system, it can improve uniformity of lithium metal deposition on a negative electrode, avoiding deteriorating electrochemical performance of the lithium metal negative electrode, thereby enhancing cycling performance of the secondary battery.

Specifically, in this embodiment of this application, it can be found by observing a cross-section of the separator using a scanning electron microscope that the pores of the porous substrate are not completely filled by the polymer coating, and abundant pore structures of the porous substrate can be observed.

In some embodiments, constituents of the polymer coating include a matrix polymer, a plasticizer, a thickener, and a lithium salt.

The matrix polymer can serve as a skeletal structure in the polymer coating. In some embodiments, a mass percentage of the matrix polymer in the polymer coating is 5% to 30%. Optionally, the mass percentage of the matrix polymer in the polymer coating is 5%, 10%, 15%, 20%, 25%, or 30%. Further, the mass percentage of the matrix polymer in the polymer coating is 5% to 20%. Within this percentage range, the matrix polymer can play a better skeletal role. As the percentage increases, the degree of cross-linking increases, which enhances binding capability to an electrolyte, thereby affecting conductivity.

In the polymer coating, the plasticizer can improve compatibility among the constituents of the polymer coating. In some embodiments, a mass percentage of the plasticizer in the polymer coating is 40% to 70%. Optionally, the mass percentage of the plasticizer in the polymer coating is 40%, 45%, 50%, 55%, 60%, 65%, or 70%. Further, the mass percentage of the plasticizer in the polymer coating is 50% to 60%. An excessively low percentage of the plasticizer hinders ion transport in the coating, affecting the ionic conductivity; and an excessively high percentage of the plasticizer makes the polymer coating difficult to fully fix. Within the preferred range, the coating can maintain a good ion conduction rate, meeting the improvement effects without affecting rate performance of the battery.

The thickener can increase viscosity of the polymer coating, preventing the polymer coating from seeping down to completely fill the pores of the porous substrate during preparation, which otherwise reduces the electrolyte infiltration of the separator. In some embodiments, a mass percentage of the thickener in the polymer coating is 3% to 15%. Optionally, the mass percentage of the thickener in the polymer coating is 3%, 4%, 5%, 6%, 8%, 10%, 12%, or 15%. Further, the mass percentage of the thickener in the polymer coating is 3% to 10%.

As an electrolytic salt, the lithium salt in the polymer coating can improve the ion conductivity of the polymer coating. In some embodiments, a mass percentage of the lithium salt in the polymer coating is 10% to 30%. Optionally, the mass percentage of the lithium salt in the polymer coating is 10%, 12%, 15%, 16%, 18%, 20%, 24%, 25%, 28%, or 30%. Further, the mass percentage of the lithium salt in the polymer coating is 10% to 20%. The lithium salt mainly enhances ion transport capability of the coating system, improving the deposition behavior of lithium metal. A high percentage of the lithium salt significantly enhances the ion transport capability, but greatly increases costs. Further, a ratio of the lithium salt to the plasticizer falling within 20% to 30% can effectively enhance the ion transport capability and ensure low costs.

In some embodiments, the matrix polymer is selected from at least one of a linear polymer and a cross-linked network polymer. As the matrix polymer, the linear polymer or the cross-linked network polymer can serve as the skeleton of the polymer coating, and fix the constituents such as the plasticizer, the thickener, and the lithium salt within the skeletal structure, thereby ensuring good uniformity and compatibility of the polymer coating. Further, the matrix polymer includes the linear polymer and the cross-linked network polymer.

In some embodiments, the plasticizer includes at least one of an ester and a sulfone. As the plasticizer, the ester has better comprehensive performance. Preferably, the plasticizer includes the ester. Optionally, the plasticizer includes at least one selected from ethyl methyl carbonate (EMC), diethyl carbonate (DEC), dimethyl carbonate (DMC), dipropyl carbonate (DPC), methyl propyl carbonate, ethyl propyl carbonate, ethylene carbonate (EC), methyl formate, methyl acetate, ethyl acetate, propyl acetate, methyl propionate, ethyl propionate, propyl propionate, methyl butyrate, ethyl butyrate, 1,4-butyrolactone, methyl sulfonyl methane, ethyl methanesulfonate, and diethyl sulfone.

In some embodiments, the thickener and the plasticizer are mutually soluble. In some embodiments, a weight-average molecular weight of the thickener is ≥ 500,000. In some embodiments, the thickener includes at least one selected from polyvinyl formal, polyvinylidene fluoride (PVDF) and a copolymer thereof, poly(difluoroethylene), polyvinylidene difluoride, trichloroethylene, polytetrafluoroethylene, acrylic acid glue, epoxy resin, polyethylene oxide (PEO), polyacrylonitrile, sodium carboxymethyl cellulose, styrene-butadiene rubber, poly(methyl acrylate), polymethyl methacrylate, polyacrylamide (PAM), and polyvinylpyrrolidone (PVP).

In some embodiments, the lithium salt includes at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluorobis(oxalato)phosphate, and lithium tetrafluoro(oxalato)phosphate.

In some embodiments, the constituents of the polymer coating further include inorganic particles with a mass percentage of 0% to 42%. The inorganic particles can serve as a filler in the polymer coating, enhancing strength of the polymer coating. Optionally, the mass percentage of the inorganic particles in the polymer coating is 0%, 5%, 10%, 15%, 20%, 25%, 30%, 35%, 40%, or 42%. Further, the mass percentage of the inorganic particles in the polymer coating is 20% to 30%.

In some embodiments, the inorganic particle is at least one selected from aluminum oxide, boehmite, zirconium oxide, aluminum nitride, titanium dioxide, magnesium oxide, silicon carbide, calcium carbonate, and diatomaceous earth.

In some embodiments, a thickness of the polymer coating is 3 µm to 20 µm. Controlling the thickness of the polymer coating within the foregoing range can ensure an appropriate adhesion force between the separator and the electrode plate, and has small influence on internal resistance of the separator. Optionally, the thickness of the polymer coating is 3 µm, 5 µm, 10 µm, 15 µm, or 20 µm.

In some embodiments, the separator further includes an inorganic coating. The inorganic coating can further improve the electrolyte infiltration of the separator.

In some embodiments, at least one inorganic coating is disposed between the porous substrate and the polymer coating.

Specifically, in some embodiments, the separator includes a porous substrate, an inorganic coating, and a polymer coating; where the inorganic coating is disposed on at least one surface of the porous substrate, and the polymer coating covers a surface of one inorganic coating away from the porous substrate. It can be understood that when the inorganic coating is provided in two, compositions of the plurality of inorganic coatings may be the same or different. With such setting, the inorganic coatings in the separator can further improve the electrolyte infiltration. With the polymer coating covering the surface of one of the inorganic coatings, where the polymer coating is used to be attached to the lithium metal negative electrode plate, the uniformity of lithium metal deposition on the negative electrode plate can be improved.

In some embodiments, at least one inorganic coating is disposed on a side surface of the polymer coating away from the porous substrate.

Specifically, in some embodiments, the separator includes a porous substrate, an inorganic coating, and a polymer coating. An inorganic coating and a polymer coating sequentially stacked are included on one side of the porous substrate; and a polymer coating and an inorganic coating sequentially stacked are included on the other side of the porous substrate. It can be understood that compositions of the plurality of inorganic coatings may be the same or different, and compositions of the plurality of polymer coatings may be the same or different.

In some embodiments, at least one inorganic coating is disposed on a surface of the porous substrate away from the polymer coating. Specifically, in some embodiments, the separator includes a porous substrate, an inorganic coating, and a polymer coating. The polymer coating covers one side surface of the porous substrate, and the inorganic coating is disposed on the other side surface of the porous substrate.

Another embodiment of this application further provides a preparation method of the foregoing separator including the following steps S1 to S3.

Step S1: Mix preparation raw materials of a polymer coating to prepare a precursor solution.

Step S2: Apply the precursor solution onto at least one surface of a porous substrate.

Step S3: Polymerize the precursor solution to prepare the polymer coating.

In some embodiments, based on mass percentage, the preparation raw materials include 5% to 30% of preparation monomers; and/or 40% to 70% of plasticizer; and/or 3% to 10% of thickener; and/or 10% to 20% of lithium salt; and/or 0% to 42% of inorganic particles.

In some embodiments, the preparation monomer includes at least one of a cross-linking monomer and a linear monomer; where the cross-linking monomer has at least two polymerization sites, and the linear monomer has one polymerization site.

In some embodiments, the cross-linking monomer is an acrylate monomer. Further, the acrylate monomer includes at least one selected from acrylic acid, methacrylic acid, methyl methacrylate, butyl methacrylate, methyl acrylate, ethyl acrylate, hydroxyethyl acrylate, hydroxyethyl methacrylate, butyl acrylate, isodecyl acrylate, isooctyl acrylate, lauryl acrylate, isobornyl acrylate, isobornyl methacrylate, ethoxyethoxyethyl acrylate, cyano acrylate, caprolactone acrylate, 2-phenoxyethyl acrylate, tetrahydrofurfuryl acrylate, ethoxylated tetrahydrofuran acrylate, cyclotrimethylolpropane acrylate, 2-carboxyethyl acrylate, cyclohexyl acrylate, ethylene glycol diacrylate, ethylene glycol dimethacrylate, propylene glycol dimethacrylate, diethylene glycol diacrylate, diethylene glycol dimethacrylate, triethylene glycol diacrylate, triethylene glycol dimethacrylate, tetraethylene glycol diacrylate, tetraethylene glycol dimethacrylate, 1,4-butanediol diacrylate, 1,4-butanediol dimethacrylate, 1,3-butanediol diacrylate, 1,3-butanediol dimethacrylate, 1,6-hexanediol diacrylate, 1,6-hexanediol dimethacrylate, dipropylene glycol diacrylate, dipropylene glycol dimethacrylate, tripropylene glycol diacrylate, tripropylene glycol dimethacrylate, neopentyl glycol diacrylate, neopentyl glycol dimethacrylate, 2(propoxylated) neopentyl glycol diacrylate, polyethylene glycol diacrylate, polyethylene glycol dimethacrylate, polypropylene glycol dimethacrylate, polycyclohexyl acrylate, methoxypolyethylene glycol acrylate, ethoxylated trimethylolpropane triacrylate, trimethylolpropane trimethacrylate, methoxy polyethylene glycol methacrylate, pentaerythritol triacrylate, propoxylated glycerol triacrylate, tris(2-hydroxyethyl)isocyanurate triacrylate, di(trimethylolpropane) tetraacrylate, pentaerythritol tetraacrylate, 4(ethoxylated) pentaerythritol tetraacrylate, and dipentaerythritol hexaacrylate.

Further, the cross-linking monomer may be at least one selected from polyethylene glycol diacrylate (PEGDA), glycerol propoxylated triacrylate (GPTA), and ethoxylated trimethylolpropane triacrylate (ETPTA).

In some embodiments, a mass percentage of the cross-linking monomer in the preparation monomer is 0% to 30%. Optionally, the mass percentage of the cross-linking monomer in the preparation monomer is 0%, 5%, 10%, 15%, 20%, 25%, or 30%.

In some embodiments, the linear monomer is at least one selected from a carbonate monomer, a sulfate monomer, a sulfonate monomer, a phosphate monomer, a carboxylate monomer, a sulfone monomer, an amide monomer, a nitrile monomer, and an ether monomer.

In some embodiments, the carbonate monomer includes at least one selected from vinylene carbonate (VC), vinyl ethylene carbonate, ethylene carbonate, propylene carbonate, butylene carbonate, fluoroethylene carbonate, and chloroethylene carbonate.

In some embodiments, the sulfate monomer includes at least one selected from vinyl ethylene sulfite, ethylene sulfite, 4-methyl ethylene sulfate, and 4-ethyl ethylene sulfate.

In some embodiments, the sulfonate monomer includes at least one selected from 1,3-propene sultone, 1,3-propane sultone, 1,4-butane sultone, and methylene methanedisulfonate.

In some embodiments, the phosphate monomer includes at least one selected from dimethyl vinyl phosphate, diethyl vinyl phosphate, diethyl propylene phosphate, diethyl butenyl phosphate, diethyl 1-buten-2-ylphosphonate, diethyl ethynyl phosphate, vinyl trifluoromethyl phosphate, vinyl-1-trifluoroethyl phosphate, diethyl fluorovinyl phosphate, and 1-trifluoropropenyl ethyl phosphate.

In some embodiments, the carboxylate monomer includes vinyl acetate.

In some embodiments, the sulfone monomer includes at least one selected from methyl vinyl sulfone, ethyl vinyl sulfone, sulfolene, sulfolane, and ethylene sulfoxide.

In some embodiments, the amide monomer includes acrylamide.

In some embodiments, the nitrile monomer includes at least one selected from acrylonitrile, succinonitrile, glutaronitrile, and adiponitrile.

In some embodiments, the ether monomer includes at least one selected from 1,3-dioxolane, ethylene oxide, 1,2-propylene oxide, 4-methyl-1,3-dioxolane, tetrahydrofuran, 2-methyltetrahydrofuran, 1,4-dioxane, dimethoxyethane, ethylene glycol diglycidyl ether, and triethylene glycol divinyl ether.

Further, the linear monomer may be at least one selected from vinylene carbonate (VC), 4-methyl ethylene sulfate, methylene methanedisulfonate, diethyl propylene phosphate, vinyl acetate, ethyl vinyl sulfone, acrylamide, acrylonitrile, and 1,3-dioxolane.

In some embodiments, a mass percentage of the linear monomer in the preparation monomer is 0% to 30%. Optionally, the mass percentage of the linear monomer in the preparation raw materials is 0%, 5%, 10%, 15%, 20%, 25%, or 30%.

Further, the preparation monomer includes the linear monomer and the cross-linking monomer; where in the preparation raw materials, the mass percentage of the linear monomer is 10% to 25%, and the mass percentage of the cross-linking monomer is 5% to 15%. The appropriate selection and proportion of the preparation monomer can further improve the uniformity of lithium metal deposition in the secondary battery.

In some embodiments, in step S3, an initiation method of the polymerization is one selected from electron beam initiation, ultraviolet initiation, and thermal initiation.

In some embodiments, a temperature for the thermal initiation is 50°C to 80°C.

In some embodiments, in step S3, the polymerization of the monomers is initiated by an initiator. Specifically, the initiator is optionally at least one of a peroxide initiator and an azo initiator. For example, the initiator may be selected from an acyl peroxide (such as benzoyl peroxide and lauroyl peroxide), a persulfate (such as ammonium persulfate), and an azo initiator (such as azobisisobutyronitrile and azobi si soheptonitrile).

In some embodiments, a viscosity of the precursor solution is 300 mPa·s to 1000 mPa·s. Controlling the viscosity of the precursor solution within the foregoing range can prevent the precursor solution from seeping into the pores of the porous substrate. Specifically, the viscosity of the precursor solution is optionally 300 mPa s, 400 mPa s, 500 mPa s, 600 mPa s, 700 mPa s, 800 mPa s, 900 mPa s, or 1000 mPa s.

In some embodiments, a processing time for step S2 and step S3 does not exceed 1 hour, further preventing the precursor solution from seeping into the pores of the porous substrate.

In addition, the following describes the secondary battery, battery module, battery pack, and electric apparatus of this application with appropriate reference to the accompanying drawings.

In an embodiment of this application, a secondary battery is provided.

Generally, the secondary battery includes a positive electrode plate, a negative electrode plate, an electrolyte, and a separator. During charging and discharging of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to mainly prevent short circuit between positive and negative electrodes and to allow the ions to pass through.

### Separator

In the embodiments of this application, the separator uses the separator according to the first aspect.

In some embodiments, material of the porous substrate may be at least one selected from glass fiber, non-woven fabric, polyethylene (PE), polypropylene (PP), polyimide (PI), and polyvinylidene difluoride. The porous substrate may be a single-layer film or a multi-layer composite film, which is not particularly limited. When the porous substrate is a multi-layer composite film, all layers may be made of the same or different materials, which is not particularly limited.

### Positive electrode plate

The positive electrode plate includes a positive electrode current collector and a positive electrode active material layer disposed on at least one surface of the positive electrode current collector, where the positive electrode active material layer includes a positive electrode active material.

For example, the positive electrode current collector includes two back-to-back surfaces in a thickness direction of the positive electrode current collector, and the positive electrode active material layer is disposed on either or both of the two back-to-back surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material such as aluminum, aluminum alloy, nickel, nickel alloy, titanium, titanium alloy, silver, or silver alloy on the polymer material matrix. The polymer material matrix is, for example, matrices of polypropylene (PP), polyethylene terephthalate (PET), polybutylene terephthalate (PBT), polystyrene (PS), and polyethylene (PE).

In some embodiments, the positive electrode active material may be a well-known positive electrode active material used for batteries in the art. For example, the positive electrode active material may include at least one of the following materials: olivine-structured lithium-containing phosphate, lithium transition metal oxide, and respective modified compounds thereof. However, this application is not limited to these materials, but may use other conventional materials that can be used as positive electrode active materials for batteries instead. One of these positive electrode active materials may be used alone, or more than two of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode active material layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode active material layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing, to obtain the positive electrode plate.

### Negative electrode plate

The negative electrode plate includes a negative electrode current collector and a negative electrode active material layer disposed on at least one surface of the negative electrode current collector, where the negative electrode active material layer includes a negative electrode active material.

For example, the negative electrode current collector includes two back-to-back surfaces in a thickness direction of the negative electrode current collector, and the negative electrode active material layer is disposed on either or both of the two back-to-back surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material such as copper, copper alloy, nickel, nickel alloy, titanium, titanium alloy, silver, or silver alloy on the polymer material matrix. The polymer material matrix may be, for example, matrices of polypropylene (PP), polyethylene terephthalate (PET), polybutylene terephthalate (PBT), polystyrene (PS), and polyethylene (PE).

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, but may use other conventional materials that can be used as negative electrode active materials for batteries instead. One of these negative electrode active materials may be used alone, or more than two of them may be used in combination.

In some embodiments, the negative electrode active material layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be at least one selected from superconducting carbon, acetylene black, carbon black, Ketjen black, carbon dots, carbon nanotubes, graphene, and carbon nanofiber.

In some embodiments, the negative electrode active material layer further optionally includes other additives such as a thickener (for example, sodium carboxymethyl cellulose (CMC-Na)).

In some embodiments, the negative electrode plate may be prepared in the following manner: the foregoing constituents used for preparing the negative electrode plate, for example, the negative electrode active material, the conductive agent, the binder, and any other constituent, are dispersed in a solvent (for example, deionized water) to produce a negative electrode slurry; and the negative electrode slurry is applied onto the negative electrode current collector, followed by processes such as drying and cold pressing, to obtain the negative electrode plate.

In some embodiments, the negative electrode plate uses a lithium metal negative electrode plate; where the lithium metal negative electrode plate is disposed close to a polymer coating of the separator.

In some embodiments, during preparation of the secondary battery, the porous substrate coated with the precursor solution in the second aspect can be attached to the lithium metal negative electrode plate, such that the precursor solution comes into contact with and is attached to the lithium metal negative electrode plate, and then the precursor solution is polymerized to prepare the polymer coating, allowing the separator to be tightly attached to the lithium metal negative electrode plate.

### Electrolyte

The electrolyte conducts ions between the positive electrode plate and the negative electrode plate. The electrolyte is not limited to any specific type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, ethylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the liquid electrolyte further optionally includes an additive. For example, the additive may include a negative electrode film-forming additive or a positive electrode film-forming additive, or may include an additive capable of improving some performance of the battery, for example, an additive for improving overcharge resistance of the battery, or an additive for improving high-temperature or low-temperature performance of the battery.

In some embodiments, the positive electrode plate, the negative electrode plate, and the separator may be made into an electrode assembly through winding or lamination.

In some embodiments, the secondary battery may include an outer package. The outer package may be used for packaging the foregoing electrode assembly and electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic. Polypropylene, polybutylene terephthalate, polybutylene succinate, and the like may be listed as the plastic.

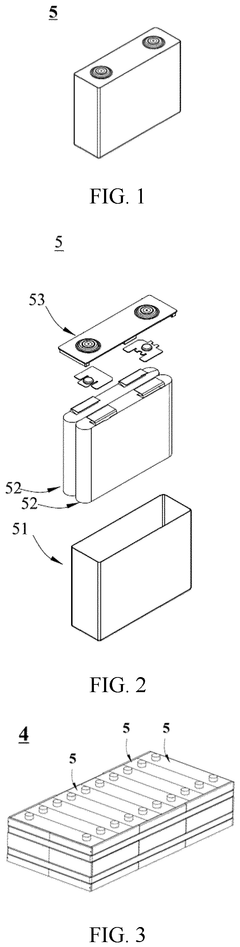

The secondary battery is not limited to any particular shape in this application, and may be cylindrical, rectangular, or of any other shapes. For example, FIG. 1 shows a rectangular secondary battery 5 as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and persons skilled in the art may make choices based on actual needs.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the secondary batteries 5 may alternatively be arranged in any other manners. Further, the plurality of secondary batteries 5 may be fixed by fasteners.

Optionally, the battery module 4 may further include a shell with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

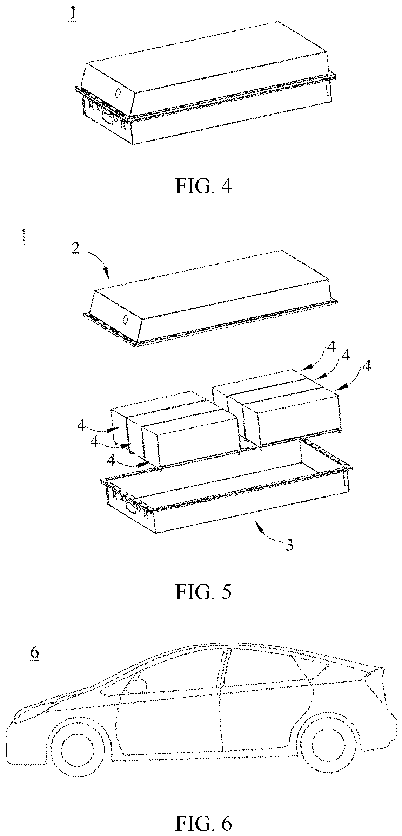

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source of the electric apparatus or an energy storage unit of the electric apparatus. The electric apparatus may include a mobile device, an electric vehicle, an electric train, a ship, a satellite system, an energy storage system, or the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

The secondary battery, the battery module, or the battery pack may be selected for the electric apparatus based on requirements for using the electric apparatus.

FIG. 6 shows an electric apparatus 6 as an example. This electric apparatus 6 is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### Preparation of positive electrode plate

NCM811, a conductive agent acetylene black, and a binder polyvinylidene difluoride (PVDF) at a weight ratio of 94:3:3 were fully stirred and evenly mixed in an N-methylpyrrolidone (NMP) solvent system, and the mixture was then applied onto two surfaces of an aluminum foil, followed by drying and cold pressing, to obtain a positive electrode plate. The positive electrode plate was cut into a corresponding size for later use.

### Preparation of negative electrode plate

A 50 µm thick lithium foil was attached to a surface of a copper foil, followed by cold pressing, to prepare a lithium metal negative electrode. The copper foil composited with lithium metal and a bare copper foil were cut into a required size for later use. The copper foil composited with lithium metal was used as a lithium metal negative electrode plate, and the bare copper foil was used as a lithium-free negative electrode plate, where lithium metal deposited on the lithium-free negative electrode plate during charging and discharging.

### Preparation of separator

A precursor solution was prepared according to the formulation in Tables 1 to 5, where a viscosity of the precursor solution was controlled within 300 mPa s to 1000 mPa s. The precursor solution was applied onto one surface of a separator (a porous substrate or a porous substrate with an initial coating) with a coating thickness of 5 µm, then immediately attached to the negative electrode plate, and exposed to ultraviolet light (2 W/cm², 10 min) to cure the precursor solution. After curing, the separator and the negative electrode plate were adhered. In Tables 1 to 5, the porous substrate used a PE, PP, or PI film with a thickness of 12 µm and a porosity of about 36%, and a polymer coating in the prepared separator did not completely fill pores of the porous substrate.

Preparation method of porous substrate with initial coating used in the examples: Aluminum oxide and a binder (PVDF) at a mass ratio of 95:5 were dissolved in NMP, and a 3 µm inorganic ceramic layer of the separator was prepared through slit coating; the opposite side of the coated side was coated to obtain a separator with the inorganic ceramic layer on two surfaces; and a slurry (PVDF (5wt%) dissolved in NMP) was prepared on the surface of the inorganic ceramic layer of the separator through spin coating, followed by drying, to obtain a polymer layer distributed in an island-like pattern.

Porosity test method of porous substrate: The porosity was tested using a true density method. A sample cup containing the sample was placed in a true density tester, the test system was sealed, and helium was introduced according to the procedure. Gas pressures in a sample chamber and a swelling chamber were measured, and then a true volume V2 was calculated according to the Boyle's law (PV=nRT). An apparent volume V1 of the sample was measured using a spiral micrometer and a vernier caliper according to the volume calculation formula (V=S*h), and the porosity of the sample was Porosity=(V1-V2)/V1*100%, where V1 was the apparent volume of the sample and V2 was the true volume of the sample.

Test method of viscosity of precursor solution: The viscosity was tested using a DV-2TLV instrument. The measurement range was related to the rotor and speed, and the calculation formula was FSR=TK*SMC*10000/RPM. The sample was poured into a dedicated sample cup, the corresponding rotor and speed were selected based on a approximate viscosity range of the sample, a multi-point (multi-point) data collection mode was selected to start automatic detection, and the viscosity data was read.

Observation of coating of separator: The prepared separator with the polymer coating was placed in liquid nitrogen and cooled for 30 min, then a cross-sectional sample was prepared, and a cross-sectional morphology of the separator was observed under an SEM. It can be observed that the coating in the example was mainly distributed on the surface of the separator substrate, and the separator substrate had no polymer dispersed inside and remained the porous morphology. Therefore, the polymer coating in the prepared separator did not completely fill the pores of the porous substrate.

### Assembly of secondary battery

The double-sided coated positive electrode plate and the adhered separator and negative electrode plate were stacked and assembled into a laminated cell, where the bare cell was assembled in the order of negative electrode plate, separator, positive electrode plate, separator, and negative electrode plate so that the separator was located between the positive electrode and the negative electrode. The bare cell was placed into an outer package to obtain a dry cell. An electrolyte solvent was EC:EMC:DMC=1:1:1 (volume ratio), and a lithium salt was LiFSI with a concentration of 1 M/L. 0.3 g of the electrolyte was injected into each cell, followed by vacuum sealing and standing for infiltration.

In Tables 1 to 7 below, VC represents vinylene carbonate, PEGDA represents polyethylene glycol diacrylate, GPTA represents glycerol propoxylated triacrylate, and ETPTA represents ethoxylated trimethylolpropane triacrylate.

**Table 1 Negative electrode systems and separator formulations in secondary batteries in Examples 1 to 4**

| No. | | Example 1 | Example 2 | Example 3 | Example 4 |
|---|---|---|---|---|---|
| Negative electrode system | | Lithium metal | Lithium metal | Lithium metal | Lithium metal |
| Separator | Porous substrate | PE | PP | PE | PI |
| | Initial coating | / | / | 3 µm ceramic layer on two surfaces | 3 µm ceramic layer on two surfaces |
| Linear monomer | Type | VC | VC | VC | VC |
| | wt% | 25 | 20 | 20 | 20 |
| Cross-linking monomer | Type | / | PEGDA | PEGDA | PEGDA |
| | wt% | / | 5 | 5 | 5 |
| Plasticizer | Type | EMC+EC (mass ratio of 1:1) | EMC+EC (mass ratio of 1:1) | EMC+EC (mass ratio of 1:1) | EMC+EC (mass ratio of 1:1) |
| | wt% | 40 | 40 | 40 | 50 |
| Thickener | Type | PVDF | PVDF | PVDF | PVDF |
| | wt% | 5 | 5 | 5 | 5 |
| Lithium salt | Type | LiFSI | LiFSI | LiFSI | LiFSI |
| | wt% | 20 | 20 | 20 | 10 |
| Inorganic ceramic particles | Type | Aluminum oxide | Aluminum nitride | Boehmite | Spinel |
| | wt% | 10 | 10 | 10 | 10 |

**Table 2 Negative electrode systems and separator formulations in secondary batteries in Examples 5 to 8**

| No. | | Example 5 | Example 6 | Example 7 | Example 8 |
|---|---|---|---|---|---|
| Negative electrode system | | Lithium metal | Lithium metal | Copper foil | Lithium metal |
| Separator | Porous substrate | PE | PE | PE | PE |
| | Initial coating | 3 µm ceramic layer on two surfaces | 3 µm ceramic layer on two surfaces | 3 µm ceramic layer on two surfaces | 3 µm ceramic layer on two surfaces |
| Linear monomer | Type | VC | VC | VC | VC |
| | wt% | 20 | 20 | 20 | 5 |
| Cross-linking monomer | Type | PEGDA | PEGDA | PEGDA | PEGDA |
| | wt% | 5 | 7 | 5 | 10 |
| Plasticizer | Type | EMC+EC (mass ratio of 1:1) | EMC+EC (mass ratio of 1:1) | EMC+EC (mass ratio of 1:1) | EMC+EC (mass ratio of 1:1) |
| | wt% | 50 | 40 | 40 | 60 |
| Thickener | Type | PVDF | PVDF | PVDF | PVDF |
| | wt% | 5 | 3 | 5 | 5 |
| Lithium salt | Type | LiFSI | LiFSI | LiFSI | LiFSI |
| | wt% | 20 | 20 | 30 | 20 |
| Inorganic ceramic particles | Type | / | Aluminum oxide | / | / |
| | wt% | / | 10 | / | / |

**Table 3 Negative electrode systems and separator formulations in secondary batteries in Examples 9 to 12**

| No. | | Example 9 | Example 10 | Example 11 | Example 12 |
|---|---|---|---|---|---|
| Negative electrode system | | Lithium metal | Lithium metal | Lithium metal | Lithium metal |
| Separator | Porous substrate | PE | PE | PE | PE |
| | Initial coating | 3 µm ceramic layer on two surfaces | 3 µm ceramic layer on two surfaces | 3 µm ceramic layer on two surfaces | 3 µm ceramic layer on two surfaces |
| Linear monomer | Type | 4-methyl ethylene sulfate | Methylene methanedisulfonate | Diethyl propylene phosphate | Vinyl acetate |
| | wt% | 20 | 20 | 20 | 20 |
| Cross-linking monomer | Type | GPTA | GPTA | GPTA | GPTA |
| | wt% | 5 | 5 | 5 | 5 |
| Plasticizer | Type | DEC | DMC | Methyl formate | Ethyl acetate |
| | wt% | 50 | 50 | 50 | 50 |
| Thickener | Type | PVDF | PVDF | PVDF | PVDF |
| | wt% | 5 | 5 | 5 | 5 |
| Lithium salt | Type | LiPF₆ | LiBF₄ | LiClO₄ | LiAsF₆ |
| | wt% | 20 | 20 | 20 | 20 |
| Inorganic ceramic particles | Type | / | / | / | / |
| | wt% | / | / | / | / |

**Table 4 Negative electrode systems and separator formulations in secondary batteries in Examples 13 to 16**

| No. | | Example 13 | Example 14 | Example 15 | Example 16 |
|---|---|---|---|---|---|
| Negative electrode system | | Lithium metal | Lithium metal | Lithium metal | Lithium metal |
| Separator | Porous substrate | PE | PE | PE | PE |
| | Initial coating | 3 µm ceramic layer on two surfaces | 3 µm ceramic layer on two surfaces | 3 µm ceramic layer on two surfaces | 3 µm ceramic layer on two surfaces |
| Linear monomer | Type | Ethyl vinyl sulfone | Acrylamide | Acrylonitril e | 1,3-dioxolane |
| | wt% | 20 | 20 | 20 | 20 |
| Cross-linking monomer | Type | GPTA | GPTA | GPTA | GPTA |
| | wt% | 5 | 5 | 5 | 5 |
| Plasticizer | Type | Methyl sulfonyl methane | 1,4-butyrolactone | DEC | DEC |
| | wt% | 50 | 50 | 50 | 50 |
| Thickener | Type | PVDF | PVDF | PVDF | PVDF |
| | wt% | 5 | 5 | 5 | 5 |
| Lithium salt | Type | LiDFOB | LiBOB | LiPO₂F₂ | LiDFOP |
| | wt% | 20 | 20 | 20 | 20 |
| Inorganic ceramic particles | Type | / | / | / | / |
| | wt% | / | / | / | / |

**Table 5 Negative electrode systems and separator formulations in secondary batteries in Examples 17 to 20**

| No. | | Example 17 | Example 18 | Example 19 | Example 20 |
|---|---|---|---|---|---|
| Negative electrode system | | Lithium metal | Lithium metal | Lithium metal | Lithium metal |
| Separator | Porous substrate | PE | PE | PE | PE |
| | Initial coating | 3 µm ceramic layer on two surfaces | / | 3 µm ceramic layer on two surfaces | / |
| Linear monomer | Type | / | VC | / | / |
| | wt% | / | 30 | / | / |
| Cross-linking monomer | Type | PEGDA | / | PEGDA | ETPTA |
| | wt% | 15 | / | 30 | 5 |
| Plasticizer | Type | EMC+EC (mass ratio of 1:1) | EMC+EC (mass ratio of 1:1) | EMC+EC (mass ratio of 1:1) | EMC+EC (mass ratio of 1:1) |
| | wt% | 60 | 40 | 45 | 40 |
| Thickener | Type | PVDF | PVDF | PVDF | PVDF |
| | wt% | 5 | 5 | 5 | 3 |
| Lithium salt | Type | LiFSI | LiFSI | LiFSI | LiFSI |
| | wt% | 20 | 15 | 20 | 10 |
| Inorganic ceramic particles | Type | / | Aluminum oxide | / | Aluminum oxide |
| | wt% | / | 10 | / | 42 |

**Table 6 Negative electrode systems and separator formulations in secondary batteries in Comparative Examples 1 to 4**

| No. | | Comparative Example 1 | Comparative Example 2 | Comparative Example 3 | Comparative Example 4 |
|---|---|---|---|---|---|
| Negative electrode system | | Lithium metal | Lithium metal | Lithium metal | Copper foil |
| Separator | Porous substrate | PE | PE | PE | PE |
| | Initial coating | / | 3 µm ceramic layer and island-like polymer layer on two surfaces | 3 µm ceramic layer on two surfaces | 3 µm ceramic layer and island-like polymer layer on two surfaces |

The separator in Comparative Example 1 was a PE film with a thickness of 12 µm and a porosity of about 36%.

The separator in Comparative Example 2 was coated with a 3 µm ceramic layer and an island-like polymer layer on two surfaces based on the separator in Comparative Example 1.

The separator in Comparative Example 3 was coated with a 3 µm ceramic layer on two surfaces based on the separator in Comparative Example 1.

Comparative Example 4 differed from Comparative Example 2 in that the negative electrode system was the lithium-free negative electrode.

Comparative Examples 5 to 7 differed from Example 1 in that the formulation of the polymer coating was different. The negative electrode systems and separator formulations in the secondary batteries in Comparative Examples 5 to 7 are recorded in Table 7. In Comparative Example 6, PVDF was not added to the polymer coating, and thus during preparation, the polymer coating completely filled the pores of the porous substrate.

**Table 7 Negative electrode systems and separator formulations in secondary batteries in Comparative Examples 5 to 7**

| No. | | Comparative Example 5 | Comparative Example 6 | Comparative Example 7 |
|---|---|---|---|---|
| Negative electrode system | | Lithium metal | Lithium metal | Lithium metal |
| Separator | Porous substrate | PE | PE | PE |
| | Initial coating | / | / | / |
| Linear monomer | Type | VC | VC | VC |
| | wt% | 30 | 20 | 20 |
| Cross-linking monomer | Type | PEGDA | PEGDA | PEGDA |
| | wt% | 30 | 10 | 5 |
| Plasticizer | Type | / | EMC+EC (mass ratio of 1:1) | EMC+EC (mass ratio of 1:1) |
| | wt% | / | 40 | 60 |
| Thickener | Type | PVDF | / | PVDF |
| | wt% | 10 | / | 5 |
| Lithium salt | Type | LiFSI | LiFSI | / |
| | wt% | 20 | 20 | / |
| Inorganic ceramic particles | Type | Aluminum oxide | Aluminum oxide | Aluminum oxide |
| | wt% | 10 | 10 | 10 |

### Tests

### Cycle life test

The prepared secondary battery was subjected to the cycle life test in a constant temperature environment of 25°C, and the process was as follows: the battery was left standing for 5 min, then discharged to 2.8 V at 0.5C (72 mA), left standing for 5 min, charged to 4.25 V at 1/3C, charged to a current of ≤ 0.05 mA at a constant voltage of 4.25 V, left standing for 5 min, and discharged to 2.8 V at 1/3C. A discharge capacity at that time was an initial discharge capacity, and was denoted as D0. Subsequently, according to the foregoing process, the cycle test was conducted in the range of 2.8 V to 4.25 V, and the capacity value Dn (n=1, 2, 3, ...) was recorded weekly. When the capacity Dn was ≤ 80%*D0, the number n of cycles was recorded as the cycle life.

### Ionic conductivity test

The slurry was prepared according to the formulations in Tables 1 to 5, applied onto the surface of the aluminum foil with a coating thickness of about 5 µm, and then exposed to ultraviolet light at 2 W/cm² for 10 min for curing. The cured polymer layer was punched into a small disc with a diameter of 16 mm, and a thickness d of the polymer layer was measured and recorded. The punched disc was packaged in a button cell and tested using an electrochemical impedance spectroscopy method with a Solartron 1470E CellTest multi-channel electrochemical workstation at a test temperature of 25°C, a test voltage of 10 mV, and a test frequency of 0.1 Hz-100K Hz, and a Nyquist plot was drawn. The obtained Nyquist plot was analyzed using Zview software with an equivalent circuit fitting method, and the intersection of the straight line with the horizontal axis was denoted as R. The ionic conductivity (λ represented the ionic conductivity, d represented the thickness, and R represented the ionic resistance) was calculated according to the formula λ=d/RS.

The test data is recorded in Table 8.

**Table 8 Cycle life of secondary batteries and ionic conductivity of polymer coatings in Examples 1 to 20 and Comparative Examples 1 to 7**

| No. | Ionic conductivity (mS/cm) | Cycle life (cycles) |
|---|---|---|
| Comparative Example 1 | / | 32 |
| Comparative Example 2 | / | 43 |
| Comparative Example 3 | / | 49 |
| Comparative Example 4 | / | 25 |
| Comparative Example 5 | 0.58 | 23 |
| Comparative Example 6 | 6.0 | 36 |
| Comparative Example 7 | 0.08 | 12 |
| Example 1 | 3.7 | 51 |
| Example 2 | 3.7 | 62 |
| Example 3 | 3.7 | 75 |
| Example 4 | 4.6 | 86 |
| Example 5 | 5.2 | 95 |
| Example 6 | 3.6 | 69 |
| Example 7 | 4.0 | 72 |
| Example 8 | 5.4 | 98 |
| Example 9 | 5.1 | 89 |
| Example 10 | 4.8 | 85 |
| Example 11 | 4.9 | 87 |
| Example 12 | 4.7 | 78 |
| Example 13 | 4.5 | 80 |
| Example 14 | 4.8 | 86 |
| Example 15 | 4.6 | 81 |
| Example 16 | 5.3 | 97 |
| Example 17 | 2.3 | 74 |
| Example 18 | 3.5 | 47 |
| Example 19 | 1.8 | 69 |
| Example 20 | 4.8 | 70 |

| | | |
|---|---|---|
| Note: The surface of the separators in Comparative Examples 1 to 4 was not provided with the polymer coating, and "/" in the table represents that the ionic conductivity of the polymer coating is not tested. | | |

It can be learned from the data in Table 8 that the cycle life of the secondary batteries in Comparative Examples 1 to 7 is 12 to 49 cycles, and the ionic conductivity of the polymer coatings in Comparative Examples 5 to 7 is 0.08 mS/cm to 6.0 mS/cm; and in the secondary batteries in Examples 1 to 20, the ionic conductivity of the polymer coatings is 1.8 mS/cm to 5.4 mS/cm, and the cycle life is 47 to 98 cycles. It can be learned that in the secondary batteries in Examples 1 to 20, using the polymer coating with a specific structure can effectively improve the uniformity of lithium metal deposition on the negative electrode plate in the lithium metal negative electrode system, thereby improving the cycle life of the secondary battery.

Specifically, in Examples 5 and 8, the polymer coating includes 5wt% to 20wt% of the linear monomers, 5wt% to 10wt% of the cross-linking monomers, 50wt% to 60wt% of the plasticizer, 5wt% of the thickener, and 20wt% of the lithium salt, where the ratio of the lithium salt to the plasticizer is 20% to 30%, and the matrix polymer is formed by polymerizing the linear monomers and the cross-linking monomers at an appropriate ratio, exhibiting a suitable binding force. Therefore, in Examples 5 and 8, the polymer coatings have better ionic conductivity, and the cycle lives are 95 and 98 cycles respectively, exhibiting better cycling performance.

In Examples 1 and 18, the matrix polymer in the polymer coating is formed by polymerizing the linear monomers, and the matrix polymer is the linear polymer, which has a weaker binding force to other constituents of the polymer coating; whereas in Examples 17, 19, and 20, the matrix polymer is formed by polymerizing the cross-linking monomers, and the matrix polymer is the cross-linked network polymer, which has a stronger binding force. Especially in Example 19, the percentage of the cross-linked network matrix polymer is higher, so the ionic conductivity of the polymer coating is slightly lower than those in other examples.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments only represent several implementations of this application, and descriptions thereof are specific and detailed, but should not be construed as any limitation on the scope of this application patent. It should be noted that persons of ordinary skill in the art may further make several modifications and improvements without departing from the concept of this application, and these modifications and improvements shall fall within the protection scope of this application. Therefore, the protection scope of this application patent should be subject to the appended claims.

## Claims

1. A separator, **characterized by** comprising:
a porous substrate; and
a polymer coating, wherein the polymer coating covers at least one surface of the porous substrate, and pores of the porous substrate are not completely filled by the polymer coating; and the polymer coating has lithium ion conductivity.

2. The separator according to claim 1, **characterized in that** constituents of the polymer coating comprise a matrix polymer, a plasticizer, a thickener, and a lithium salt.

3. The separator according to claim 2, **characterized in that** a mass percentage of the matrix polymer in the polymer coating is 5% to 30%.

4. The separator according to claim 2 or 3, **characterized in that** a mass percentage of the plasticizer in the polymer coating is 40% to 70%.

5. The separator according to any one of claims 2 to 4, **characterized in that** a mass percentage of the thickener in the polymer coating is 3% to 15%.

6. The separator according to any one of claims 2 to 5, **characterized in that** a mass percentage of the lithium salt in the polymer coating is 10% to 30%.

7. The separator according to any one of claims 2 to 6, **characterized in that** the matrix polymer is selected from at least one of a linear polymer and a cross-linked network polymer.

8. The separator according to any one of claims 2 to 7, **characterized in that** the plasticizer comprises at least one of an ester and a sulfone.

9. The separator according to any one of claims 2 to 8, **characterized in that** the plasticizer comprises at least one selected from ethyl methyl carbonate, diethyl carbonate, dimethyl carbonate, dipropyl carbonate, methyl propyl carbonate, ethyl propyl carbonate, ethylene carbonate, methyl formate, methyl acetate, ethyl acetate, propyl acetate, methyl propionate, ethyl propionate, propyl propionate, methyl butyrate, ethyl butyrate, 1,4-butyrolactone, methyl sulfonyl methane, ethyl methanesulfonate, and diethyl sulfone.

10. The separator according to any one of claims 2 to 9, **characterized in that** the thickener and the plasticizer are mutually soluble.

11. The separator according to any one of claims 2 to 10, **characterized in that** the thickener comprises at least one selected from polyvinyl formal, polyvinylidene fluoride and a copolymer thereof, poly(difluoroethylene), polyvinylidene difluoride, trichloroethylene, polytetrafluoroethylene, acrylic acid glue, epoxy resin, polyethylene oxide, polyacrylonitrile, sodium carboxymethyl cellulose, styrene-butadiene rubber, poly(methyl acrylate), polymethyl methacrylate, polyacrylamide, and polyvinylpyrrolidone.

12. The separator according to any one of claims 2 to 11, **characterized in that** a weight-average molecular weight of the thickener is ≥ 500,000.

13. The separator according to any one of claims 2 to 12, **characterized in that** the lithium salt comprises at least one selected from lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluoro(oxalato)borate, lithium bis(oxalato)borate, lithium difluorophosphate, lithium difluorobis(oxalato)phosphate, and lithium tetrafluoro(oxalato)phosphate.

14. The separator according to any one of claims 2 to 13, **characterized in that** the constituents of the polymer coating further comprise inorganic particles with a mass percentage of 0% to 42%.

15. The separator according to claim 14, **characterized in that** the mass percentage of the inorganic particles in the polymer coating is 20% to 30%.

16. The separator according to claim 14 or 15, **characterized in that** the inorganic particle is at least one selected from aluminum oxide, boehmite, zirconium oxide, aluminum nitride, titanium dioxide, magnesium oxide, silicon carbide, calcium carbonate, and diatomaceous earth.

17. The separator according to any one of claims 1 to 16, **characterized in that** a thickness of the polymer coating is 3 µm to 20 µm.

18. The separator according to any one of claims 1 to 17, **characterized in that** the separator further comprises an inorganic coating;
wherein at least one inorganic coating is disposed between the porous substrate and the polymer coating;
or at least one inorganic coating is disposed on a side surface of the polymer coating away from the porous substrate;
or at least one inorganic coating is disposed on a surface of the porous substrate away from the polymer coating.

19. A preparation method of separator, **characterized by** comprising the following steps:
mixing preparation raw materials of a polymer coating to prepare a precursor solution;
applying the precursor solution onto at least one surface of a porous substrate;
and
polymerizing the precursor solution to prepare the polymer coating.

20. The preparation method of separator according to claim 19, **characterized in that** based on mass percentage, the preparation raw materials comprise 5% to 30% of preparation monomers; and/or 40% to 70% of plasticizer; and/or 3% to 10% of thickener; and/or 10% to 20% of lithium salt; and/or 0% to 42% of inorganic particles.

21. The preparation method of separator according to claim 20, **characterized in that** the preparation monomer comprises at least one of a cross-linking monomer and a linear monomer; wherein the cross-linking monomer has at least two polymerization sites, and the linear monomer has one polymerization site.

22. The preparation method of separator according to claim 21, **characterized in that** the cross-linking monomer is an acrylate monomer.

23. The preparation method of separator according to claim 21 or 22, **characterized in that** a mass percentage of the cross-linking monomer in the preparation raw materials is 0% to 30%.

24. The preparation method of separator according to any one of claims 21 to 23, **characterized in that** the linear monomer is at least one selected from a carbonate monomer, a sulfate monomer, a sulfonate monomer, a phosphate monomer, a carboxylate monomer, a sulfone monomer, an amide monomer, a nitrile monomer, and an ether monomer.

25. The preparation method of separator according to any one of claims 21 to 24, **characterized in that** a mass percentage of the linear monomer in the preparation raw materials is 0% to 30%.

26. The preparation method of separator according to any one of claims 19 to 25, **characterized in that** in the step of polymerizing the precursor solution, an initiation method of the polymerization is one selected from electron beam initiation, ultraviolet initiation, and thermal initiation.

27. The preparation method of separator according to any one of claims 19 to 26, **characterized in that** a viscosity of the precursor solution is 300 mPa·s to 1000 mPa s.

28. A secondary battery, **characterized by** comprising the separator according to any one of claims 1 to 18 or a separator prepared by using the preparation method of separator according to any one of claims 19 to 27.

29. The secondary battery according to claim 28, **characterized in that** the secondary battery further comprises a lithium metal negative electrode plate; wherein the lithium metal negative electrode plate is disposed close to a polymer coating of the separator.

30. A battery module, **characterized by** comprising the secondary battery according to claim 28 or 29.

31. A battery pack, **characterized by** comprising the battery module according to claim 30.

32. An electric apparatus, **characterized by** comprising at least one of the secondary battery according to claim 28 or 29, the battery module according to claim 30, and the battery pack according to claim 31.
